# EUROPEAN PATENT APPLICATION

(11) **EP 4 369 444 A1**
(43) Date of publication of application: **15.05.2024**
(21) Application number: 22849716.0
(22) Date of filing: 15.06.2022
(51) Int. Cl.: H01M 8/021, C23G 1/08, C25F 1/06, C22C 38/42, C22C 38/50, C22C 38/48, C22C 38/00, C21D 8/02

(54) **STAINLESS STEEL HAVING EXCELLENT CONTACT RESISTANCE FOR PEMFC SEPARATOR AND METHOD OF MANUFACTURING SAME**

(30) Priority: 26.07.2021 KR 20210097751
(71) Applicant: POSCO Co., Ltd, Pohang-si, Gyeongsangbuk-do 37859 (KR)
(72) Inventor: KIM, Kwangmin, Pohang-si Gyeongsangbuk-do 37669 (KR); KIM, Jonghee, Daejeon 34200 (KR); SEO, Bosung, Pohang-si Gyeongsangbuk-do 37656 (KR)
(74) Representative: Nederlandsch Octrooibureau
(86) International application number: PCT/KR2022/008457
(87) International publication number: WO 2023/008737

(57) **Abstract**

Disclosed are a stainless steel for a fuel cell separator and a method of manufacturing the same. The stainless steel has a low contact resistance as a material for a fuel cell separator and surface roughness parameters that may represent a surface shape of the stainless steel are defined and provided. Specifically, the present disclosure provides a stainless steel for a fuel cell separator with excellent contact resistance and a method of manufacturing the same. The stainless steel includes, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities, wherein at least one surface has a three-dimensional arithmetic average roughness (Sa) of 0.05 µm or more and a developed interfacial area ratio (Sdr) of 5% or more.

## Description

### [Technical Field]

The present disclosure relates to a stainless steel for a separator of a polymer electrolyte membrane (PEM) fuel cell having a low contact resistance and a method of manufacturing the same, and more particularly, a stainless steel for a fuel cell separator having a low contact resistance by enlarging a contact area with a gas diffusion layer by adjusting a shape of the surface of the separator.

### [Background Art]

In general, a fuel cell stack is in the form of a stack of unit cells each consisting of a membrane electrode assembly including an electrolyte, electrodes, and a gas diffusion layer (GDL), and a separator. Therefore, the separator is in contact with the GDL, and a contact resistance generated in an interface between the separator and the GDL deteriorates performance of a unit cell and a fuel cell.

The contact resistance of the separator is mainly affected by two factors. A first factor is a passivated layer that is an oxide layer formed on the surface of a metallic separator. Although a separator has a high corrosion resistance by the passivated layer, the passivated layer, as a non-conductive oxide layer, increases a contact resistance, and thus it is preferable that the passivated layer is as thin as possible. A second factor affecting the contact resistance is a contact area between the separator and the GDL. An actual contact area, rather than an apparent contact area, between the separator and the GDL is important. Unlike the apparent contact area, the actual contact area between the separator and the GDL is considerably affected by the surface shapes of the separator and the GDL. Particularly, it is considered that micron-scale fine surface shapes present on the surface have a major influence thereon. As the actual contact area between the separator and the GDL increases, the contact resistance tends to decrease. As the actual contact area decreases, the contact resistance tends to increase. Therefore, the effect on reducing the contact resistance varies according to the surface shape of the separator.

An attempt to reduce contact resistance by adjusting the surface shape has been conducted, and Japanese Patent Laid-open Publication No. 2002-270196 discloses a separator formed of a stainless steel having irregularities on the surface and having a surface roughness parameter: a center line average surface roughness (Ra), i.e., arithmetic average surface roughness, of 0.03 to 2 µm. However, stainless steels having similar Ra values may have different contact resistances. Therefore, it is difficult to predict a change in contact resistance by using only the range of Ra that is a 2D surface parameter.

Therefore, in order to significantly reduce contact resistance, it is necessary to understand the relationship between contact area and surface parameters and it is necessary to implement a surface shape capable of maximizing the contact area with the GDL and define the same as a representative surface parameter.

### [Disclosure]

### [Technical Problem]

To solve the problem as described above, provided are a stainless steel having a low contact resistance as a material for a fuel cell separator and surface roughness parameters representing a surface shape thereof.

### [Technical Solution]

In accordance with an aspect of the present disclosure, a stainless steel for a fuel cell separator with excellent contact resistance includes, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities, wherein at least one surface has a three-dimensional arithmetic average roughness (Sa) of 0.05 µm or more and a developed interfacial area ratio (Sdr) of 5% or more.

In accordance with another aspect of the present disclosure, a method of manufacturing a stainless steel for a fuel cell separator having excellent contact resistance includes: preparing a cold-rolled steel sheet by hot rolling and cold rolling a stainless steel including, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities, wherein at least one surface has a three-dimensional arithmetic average roughness (Sa) of 0.05 µm or more and a developed interfacial area ratio (Sdr) of 5% or more; and immersing the cold-rolled steel sheet in an acid solution.

### [Advantageous Effects]

According to the method of manufacturing a separator according to the present disclosure, a separator having a low contact resistance in a fuel cell environment may be manufactured without performing an expensive coating process.

### [Description of Drawings]

FIG. 1 shows a three-dimensional (3D) surface shape of Comparative Example 3.
FIG. 2 shows a 3D surface shape of Example 10.

### [Best Mode]

A stainless steel for a fuel sell separator having excellent contact resistance according to an embodiment of the present disclosure includes, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities, wherein at least one surface has a three-dimensional arithmetic average roughness (Sa) of 0.05 µm or more and a developed interfacial area ratio (Sdr) of 5% or more.

### [Modes of the Invention]

The specification does not disclose all elements of embodiments, and contents known in the art to which the present disclosure belongs and redundant descriptions will be omitted.

In addition, the term "include" an element does not preclude the other elements but further includes an element unless otherwise stated.

Thus, an expression used in the singular encompasses the expression of the plural, unless it has a clearly different meaning in the context.

Hereinafter, the present disclosure will be described in detail with reference to the accompanying drawings.

### [Stainless Steel for Fuel Cell Separator]

A stainless steel for a fuel cell separator according to an embodiment of the present disclosure having excellent contact resistance includes, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities, wherein at least one surface has a three-dimensional arithmetic average roughness (Sa) of 0.05 µm or more and a developed interfacial area ratio (Sdr) of 5% or more.

Sa, as a surface parameter, is an arithmetic average roughness of the surface of the separator, and Sdr is a developed interfacial area ratio generated by irregularities present on the surface of the separator. The parameters are three-dimensional parameters and advantageous in that a surface shape may be defined in more detail than conventional two-dimensional surface parameters. Therefore, the parameters affect the actual contact area between the separator and the GDL acting as a factor in reducing contact resistance of the separator. The Sa and Sdr parameters are defined according to the ISO 25178 standards. Sa is a 3D arithmetic average roughness of a surface different from Ra that is a 2D arithmetic average roughness and a unit thereof is µm, and Sdr is a 3D developed interfacial area ratio (Sdr) and refers to an increase ratio of a developed area that is an actual surface area of a measured shape compared to an apparent area and a unit thereof is %, which is an increase rate multiplied by 100. An Sdr of a completely flat surface may be 0% because there is no increase in area compared to the apparent area. If a surface has a shape with heights such as irregularities or wrinkles, the Sdr indicates a value greater than 0.

Therefore, at least one surface of the separator according to an embodiment of the present disclosure has a 3D arithmetic average roughness Sa of 0.05 µm or more, and a developed interfacial area ratio Sdr of 5% or more. This means that the irregularities with heights are present on the surface of the separator, thereby enlarging the actual contact area with the GDL, and thus contact resistance may be significantly reduced.

In addition, according to an embodiment of the present disclosure, a stainless steel for a fuel cell separator having excellent contact resistance may have a contact resistance value of 10 mΩ·cm² or less. In this regard, the contact resistance refers to an interfacial contact resistance of one surface between the surface of the separator and the surface of the GDL in contact with each other.

Hereinafter, the unit is wt% unless otherwise stated. In addition, the term "include" an element does not preclude other elements but may further include another element, unless otherwise stated.

### Carbon (C) and nitrogen (N)

Carbon (C) and nitrogen (N) form a Cr carbonitride in a steel. As a result, corrosion resistance of a Cr-depleted layer decreases. Therefore, it is preferable to control the contents of the two elements as low as possible. Therefore, the contents of C and N may be controlled in the present disclosure such that the C content may be more than 0 but not more than 0.02%, and the N content may be more than 0 but not more than 0.02%.

### Silicon (Si)

Si improves high-temperature oxidation resistance and enhances corrosion resistance by strengthening a passivated layer of a stainless steel. However, an excess of Si deteriorates elongation, and thus the Si content may be more than 0 but not more than 0.4 wt% in the present disclosure.

### Manganese (Mn)

Mn is an element effective on deoxidization. However, MnS that is an Mn inclusion reduces corrosion resistance, and the Mn content may be more than 0 but not more than 0.3% in the present disclosure.

### Phosphorus (P)

P reduces not only corrosion resistance but also toughness, and thus the P content may be controlled to more than 0 but not more than 0.04%.

### Sulfur (S)

S forms MnS, and the formed MnS serves as an origin of corrosion to deteriorate corrosion resistance. In the present disclosure, in consideration thereof, the S content may be controlled to more than 0 but not more than 0.02%.

### Chromium (Cr)

Cr, as an element promoting formation of an oxide of a stainless steel, should be added in an amount of 15% or more to obtain corrosion resistance. However, en excess of Cr may cause a problem of increasing sticking defects due to formation of dense oxide scales during hot rolling. Thus, the Cr content may be controlled to 35% or less, preferably 34% or less.

### Titanium (Ti) and niobium (Nb)

Titanium (Ti) and niobium (Nb) are elements effectively forming carbonitrides from C and N contained in steels. However, toughness is reduced thereby. Thus, in the present disclosure, in consideration thereof, more than 0 or not more than 0.5% of at least one of Ti and Nb may be used.

### Copper (Cu)

Copper (Cu) serves to enhance corrosion resistance of a stainless steel under an acidic atmosphere at which a fuel cell operates. However, an excess of copper (Cu) may deteriorate performance and formability of the fuel cell due to elution of copper (Cu). Therefore, in the present disclosure, in consideration thereof, the Cu content may be controlled to more than 0 but not more than 1%.

### Nickel (Ni)

Nickel (Ni) is an impurity inevitably contained in steels. Like C and N, Ni is an element stabilizing an austenite phase and improving corrosion resistance by slowing down a corrosion rate. However, an excess of Ni may cause problems of deteriorating formability and increasing manufacturing costs. In consideration of economic feasibility, the Ni content may be controlled to more than 0 but less than 0.4%.

### [Method of Manufacturing Stainless Steel for Fuel Cell Separator]

A method of manufacturing a stainless steel for a fuel cell separator having excellent contact resistance according to an embodiment of the present disclosure may include: preparing a cold-rolled steel sheet by hot rolling and cold rolling a stainless steel including, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities, wherein at least one surface has a three-dimensional arithmetic average roughness (Sa) of 0.05 µm or more and a developed interfacial area ratio (Sdr) of 5% or more; and immersing the cold-rolled steel sheet in an acid solution.

In addition, according to an embodiment of the present disclosure, the acid solution in which the cold-rolled steel sheet is immersed may include hydrochloric acid or sulfuric acid.

In addition, according to an embodiment of the present disclosure, the method of manufacturing a stainless steel for a fuel cell separator having excellent contact resistance may further include: performing a primary electrolysis at a current density of 0.15 to 0.45 A/cm², and a secondary electrolysis at a current density of 0.03 to 0.07 A/cm²; and immersing the stainless steel sheet in a mixed acid solution after the immersing the cold-rolled stainless steel sheet.

Hereinafter, the present disclosure will be described in more detail with reference to examples.

The present disclosure is not limited to the following examples but may be embodied in other forms.

### (Examples)

Table 1 shows alloying elements of stainless steels for fuel cell separators. The stainless steels used in the present disclosure was prepared by cold-rolling each of the stainless steels having the compositions using a Z-mill (cold rolling mill) in a cold rolling process to prepare a cold-rolled steel sheet, and performing bright annealing heat treatment in a heat treatment process.

**Table 1**

| Category | C | Si | Mn | P | S | Cr | Ni | Cu | Ti | Nb | N |
|---|---|---|---|---|---|---|---|---|---|---|---|
| Inventive Steel 1 | 0.007 | 0.15 | 0.15 | 0.02 | 0.0005 | 21 | 0.2 | 0.4 | 0.3 | - | 0.01 |
| Inventive Steel 2 | 0.015 | 0.2 | 0.2 | 0.02 | 0.0004 | 16 | 0.1 | 0.1 | 0.2 | - | 0.007 |
| Inventive Steel 3 | 0.01 | 0.15 | 0.15 | 0.02 | 0.0005 | 22 | 0.15 | 0.2 | 0.2 | 0.2 | 0.008 |
| Comparative Steel 1 | 0.007 | 0.1 | 0.15 | 0.02 | 0.0005 | 14 | 0.1 | 0.2 | 0.2 | - | 0.006 |

Surface shapes of Inventive Steels and Comparative Steels listed in Table 1 were modified according to the conditions shown in Table 2 below to analyze the relationships between contact resistance and the surface parameters. The surface shapes of the stainless steels may be modified according to the following processes. The surface shape modification process may be performed by conducting process A alone or by sequentially conducting processes A and D, processes B and D, or processes C, C, and D. Corrosion resistance was evaluated in a fuel cell environment before and after the surface shape modification process. Evaluation of corrosion resistance was performed by conducting an anodic polarization test in a mixed solution of 0.05 M sulfuric acid and 2 ppm hydrofluoric acid that is a fuel cell operating environment after the surface shape modification process, and measuring a current density at 0.6 V relative to saturated calomel electrode (SCE) as a reference electrode. A current density of 1.0 µA/cm² or less was considered fine, and a current density greater than 1.0 µA/cm² was considered poor.

Contact resistance was evaluated after the surface shape modification process. Two sheets of the prepared cold-rolled material were prepared and carbon paper (SGL-10BA) was disposed therebetween, and then interfacial contact resistance was evaluated four times at contact pressure of 100 N/cm², followed by calculation of an average value thereof.

**Table 2**

| Category | Steel type | Surface shape modification process | | | | Sa (µm) | Sdr (%) | Contact resistan ce (mΩ·cm² ) | Corrosi on resistan ce |
|---|---|---|---|---|---|---|---|---|---|
| Example 1 | Inventive Steel 1 | A (50°C, 30 sec) | | | | 0.066 | 6.8 | 9.8 | fine |
| Example 2 | Inventive Steel 2 | A (50°C, 30 sec) | | | | 0.075 | 9.6 | 9.0 | fine |
| Example 3 | Inventive Steel 3 | A(50°C, 30 sec) | | | | 0.071 | 7.7 | 9.3 | fine |
| Example 4 | Inventive Steel 1 | A (50°C, 30 sec) | | D (50°C, 30 sec) | | 0.099 | 15.5 | 7.4 | fine |
| Example 5 | Inventive Steel 1 | B (60°C, 30 sec) | | D (50°C, 30 sec) | | 0.071 | 9.7 | 8.2 | fine |
| Example 6 | Inventive Steel 2 | A (50°C, 30 sec) | | D (50°C, 30 sec) | | 0.106 | 18.6 | 7.2 | fine |
| Example 7 | Inventive Steel 3 | A (50°C, 30 sec) | | D (50°C, 30 sec) | | 0.097 | 14.6 | 7.7 | fine |
| Example 8 | Inventive Steel 1 | C (0.15A/c m²) | C (0.07A/c m²) | | D (50°C, 30 sec) | 0.098 | 15.7 | 7.5 | fine |
| Example 9 | Inventive Steel 1 | C (0.3A/cm ²) | C (0.07A/c m²) | | D (50°C, 30 sec) | 0.103 | 18.6 | 7.3 | fine |
| Example 10 | Inventive Steel 1 | C (0.45A/c m²) | C (0.03A/c m²) | | D (50°C, 30 sec) | 0.111 | 29.7 | 6.0 | fine |
| Example 11 | Inventive Steel 1 | C (0.15A/c m²) | C (0.03A/c m²) | | D (50°C, 30 sec) | 0.104 | 21.2 | 7.1 | fine |
| Example 12 | Inventive Steel 2 | C (0.45A/c m²) | C (0.03A/c m²) | | D (50°C, 30 sec) | 0.134 | 27.6 | 6.6 | fine |
| Example 13 | Inventive Steel 3 | C (0.45A/c m²) | C (0.03A/c m²) | | D (50°C, 30 sec) | 0.098 | 26.9 | 6.2 | fine |
| Comparative Example 1 | Comparative Steel 1 | C (0.45A/c | C (0.03A/c | | D (50°C, 30 | 0.128 | 26.8 | 6.8 | poor |
| | | m²) | m²) | | sec) | | | | |
| Comparative Example 2 | Comparative Steel 1 | A (50°C, 30 sec) | | D (50°C, 30 sec) | | 0.102 | 14.2 | 7.7 | poor |
| Comparative Example 3 | Inventive Steel 1 | - | | | | 0.043 | 2.4 | 153 | fine |
| Comparative Example 4 | Comparative Steel 1 | - | | | | 0.047 | 3.6 | 130 | poor |
| A: immersion in 20% hydrochloric acid | | | | | | | | | |
| B: immersion in 20% sulfuric acid | | | | | | | | | |
| C: electrolysis in 20% sulfuric acid | | | | | | | | | |
| D: immersion in mixed acid (15% nitric acid and 1% hydrofluoric acid) | | | | | | | | | |

Referring to the results of Table 2, it was confirmed that Examples 1 to 13 had low contact resistances of 10 mΩ·cm² or less because the Sa value was 0.05 µm or more and the Sdr value was 5% or more. Also, it was confirmed that fine corrosion resistance of 1.0 µA/cm² was obtained in the corrosion resistance evaluation in a fuel cell environment.

Meanwhile, although low contact resistances of 1.0 µA/cm² or less were obtained in Comparative Examples 1 and 2 by the surface shape modification process, the corrosion resistance of Comparative Steel 1 was poor due to the low Cr content. Therefore, it was confirmed that a material with poor corrosion resistance is not suitable as a material for a separator because corrosion resistance may significantly affect durability of a fuel cell.

In addition, higher Sa and Sdr values were obtained in Examples 4 to 7 in which immersion in the mixed acid solution was added compared to Examples 1 to 3 in which immersion was performed only in hydrochloric acid. This is because surface dissolution progressed more actively by the immersion in the mixed acid solution, and thus many small irregularities were formed on the surface.

In addition, referring to the results of Examples 8 to 13, it was confirmed that the surface shape may be adjusted more effectively by applying sulfuric acid electrolysis. The passivated layer formed on the surface of the stainless steel was effectively removed by the sulfuric acid electrolysis and the surface having higher Sa and Sdr values was formed by inducing elution of the matrix. The high Sdr means a developed area, unlike an apparent area, significantly increased due to a rough surface shape rather than a flat surface. Therefore, in the case of using a stainless with a high Sdr value as a separator, it is expected that the actual contact area with the GDL significantly increases in a stack, thereby obtaining a low contact resistance value.

Referring to the surface shape modification process of Table 2, although a low contact resistance of 10 mΩ·cm² or less was obtained only by immersing in a hydrochloric acid solution, it is preferable to conduct the process of immersing in the mixed acid solution. In addition, the sulfuric acid electrolysis process was performed twice, it was confirmed that it is preferable to perform a primary electrolysis at a current density of 0.15 to 0.45 A/cm² and a secondary electrolysis at a current density of 0.03 to 0.07 A/cm². However, as well as the surface shape modification processes, a low contact resistance of 10 mΩ·cm² or less may also be obtained in the case where the surface is adjusted to have a Sa value of 0.05 µm or more and a Sdr value of 5% or more via various processes such as electrolysis and immersion by using an acid solution. In addition, the acid solution may be replaced with any solution including an inorganic solution capable of induce surface dissolution of the stainless steel such as hydrochloric acid, nitric acid, sulfuric acid, and acetic acid, and an oxidant.

Meanwhile, it is considered that the stainless steel including 15% or less of Cr may not be applied as a material of a separator due to poor corrosion resistance even by the surface shape modification process.

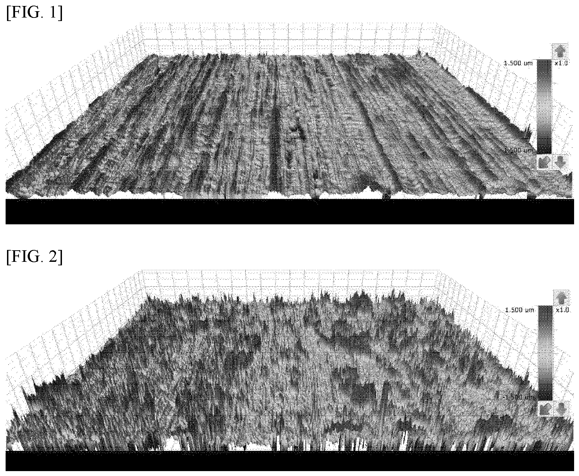

FIG. 1 shows a 3D surface shape of Comparative Example 3, and FIG. 2 shows a 3D surface shape of Example 10. Upon comparison between FIGS. 1 and 2, while the surface of Comparative Example 3 was not treated by the surface shape modification process, the surface of Example 10 was treated by the surface shape modification process and had an Sa of 0.111 and an Sdr of 29.7 indicating that the developed area was significantly enlarged on the surface of the separator due to a lot of fine and sharp irregularities formed thereon. Because the separator having the surface shape shown in FIG. 2 has a large actual contact area with the GDL while a fuel cell actually operates, a low contact resistance may be obtained and performance of a fuel cell may be improved.

### [Industrial Applicability]

According to the present disclosure, a separator having a low contact resistance in a fuel cell environment may be manufactured without an expensive coating process, and thus industrial applicability of the present disclosure was verified.

## Claims

1. A stainless steel for a fuel cell separator with excellent contact resistance comprising, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities,
wherein at least one surface has a three-dimensional arithmetic average roughness (Sa) of 0.05 µm or more and a developed interfacial area ratio (Sdr) of 5% or more.

2. The stainless steel according to claim 1, wherein the stainless steel has a contact resistance of 10 mΩ·cm² or less.

3. A method of manufacturing a stainless steel for a fuel cell separator with excellent contact resistance, the method comprising:
preparing a cold-rolled steel sheet by hot rolling and cold rolling a stainless steel including, in percent by weight (wt%), more than 0 but not more than 0.02% of C, more than 0 but not more than 0.02% of N, more than 0 but not more than 0.4% of Si, more than 0 but not more than 0.3% of Mn, more than 0 but not more than 0.04% of P, more than 0 but not more than 0.02% of S, 15 to 34% of Cr, more than 0 but not more than 1% of Cu, more than 0 but not more than 0.4% of Ni, more than 0 or not more than 0.5% of at least one of Ti and Nb, and the balance of Fe and inevitable impurities,
wherein at least one surface has a three-dimensional arithmetic average roughness (Sa) of 0.05 µm or more and a developed interfacial area ratio (Sdr) of 5% or more; and
immersing the cold-rolled steel sheet in an acid solution.

4. The method according to claim 3, wherein the acid solution comprises hydrochloric acid or sulfuric acid.

5. The method according to claim 3, further comprising:
performing a primary electrolysis at a current density of 0.15 to 0.45 A/cm², and a secondary electrolysis at a current density of 0.03 to 0.07 A/cm²; and
immersing the stainless steel sheet in a mixed acid solution.
